# EUROPEAN PATENT APPLICATION

(11) **EP 3 518 221 A1**
(43) Date of publication of application: **31.07.2019**
(21) Application number: 17866898.4
(22) Date of filing: 06.10.2017
(51) Int. Cl.: G09F 19/00, G06F 13/00, G06Q 30/02

(54) **DIGITAL SIGNAGE CONTROL DEVICE, DIGITAL SIGNAGE CONTROL PROGRAM, AND DIGITAL SIGNAGE SYSTEM**

(30) Priority: 02.11.2016 JP 2016214880
(71) Applicant: Vacan, Inc., Tokyo 1620824 (JP)
(72) Inventor: KAWANO, Takanobu, Tokyo 1620824 (JP)
(74) Representative: Dietz, Christopher Friedrich
(86) International application number: PCT/JP2017/036465
(87) International publication number: WO 2018/083943

(57) **Abstract**

A digital signage control device according to the present invention is a digital signage control apparatus for distributing information to be displayed on a digital signage via a network, which digital signage control apparatus includes a storage part configured to store advertisement contents of a store; a detection part configured to detect a vacant number of store facilities to be provided to a user; and a distribution part configured to distribute information corresponding to the vacant number of the store facilities to the digital signage, wherein the distribution part distributes the information on the number of vacant store facilities when the vacant number of the store facilities is larger than a predetermined remaining number, and advertisement content information of the store, in place of the information on the number of vacant store facilities, when the vacant number of the store facilities is smaller than the predetermined remaining number.

## Description

### Technical Field

The present invention relates to a digital signage control device, a digital signage control program, and a digital signage system.

### Background Art

In recent years, digital signage (Digital Signage) has been widespread. Digital signage system is an electronic signage system that delivers various contents such as video and audio in a timely manner to a display installed at a place where people can observe such things as towns, buildings, and stations. It is also used as an advertising medium for distributing advertisement contents.

As a technique relating to the distribution of advertisement contents in digital signage, for example, Patent Document 1 discloses a technique of capturing attributes of consumers passing through the display and personal preference information, dynamically assigning suitable advertisements and the like are transmitted to a user.

Further, for example, Patent Document 2 can designate what type of advertisement medium is used and in what manner to advertise in accordance with the situation of the store, thereby realizing a highly attractive advertisement in order to make it possible.

[Patent Document 1] Japanese Unexamined Patent Publication No. 2016-095837
[Patent Document 2] Japanese Patent Application Laid-Open No. 2016-170822

### Disclosure of Invention

### Problem to be Solved by Invention

However, in the case of a time zone such as a weekend, a holiday, or a mealtime, for example, if the user is interested in the advertisement contents of a digital signage (electronic signboard) installed near the entrance of the store or near the entrance of the compound commercial facility, and went to the store and entered the store, however, there are a lot of times experiencing that the seat was not vacant (could not be entered in full).

The present invention has been made in view of the above points, and it is an object of one aspect to improve the convenience of a user and improve the attractiveness of a store by using digital signage.

### Means to Solve the Problem

In order to solve the above problem, a digital signage control device according to the present invention is a digital signage control apparatus for distributing information to be displayed on a digital signage via a network, which digital signage control apparatus includes:
a storage part configured to store advertisement contents of a store;
a detection part configured to detect a vacant number of store facilities to be provided to a user; and
a distribution part configured to distribute information corresponding to the vacant number of the store facilities to the digital signage,
wherein the distribution part distributes the information on the number of vacant store facilities when the vacant number of the store facilities is larger than a predetermined remaining number, and advertisement content information of the store, in place of the information on the number of vacant store facilities, when the vacant number of the store facilities is smaller than the predetermined remaining number.

### Advantage of the Invention

According to the embodiment of the present invention, it is possible to improve the convenience of the user by using the digital signage and to improve the attracting ability of the store.

### Brief Description of Drawings

FIG. 1 is a diagram showing a configuration example of a digital signage system according to this present embodiment.
FIG. 2 is a diagram showing a hardware configuration example of a control server according to the present embodiment.
FIG. 3 is a diagram showing a software configuration example of a control server according to the present embodiment.
FIG. 4 is a diagram showing data examples of an advertisement management DB and a vacancy management DB according to the present embodiment.
FIG. 5 is a diagram showing an example of a store installation of a monitoring device according to the present embodiment.
FIG. 6 is a diagram showing an example of a new registration screen of store information according to the present embodiment.
FIG. 7 is a diagram showing an example of a seat setting screen according to the present embodiment.
FIG. 8 is a diagram showing an example of a seat detail setting screen according to the present embodiment.
FIG. 9 is a diagram showing an example of a display screen (part 1) of a digital signage according to the present
   embodiment.
FIG. 10 is a diagram showing an example of a display screen (part 2) of the digital signage according to the present embodiment.
FIG. 11 is a flowchart showing update processing of a control server according to the present embodiment.
FIG. 12 is a flowchart showing distribution processing A of the control server according to the present embodiment.
FIG. 13 is a flowchart showing distribution processing B of the control server according to the present embodiment.

### Best Mode for Carrying Out the Invention

Embodiments of the present invention will be described in detail with reference to the drawings.

### <System configuration>

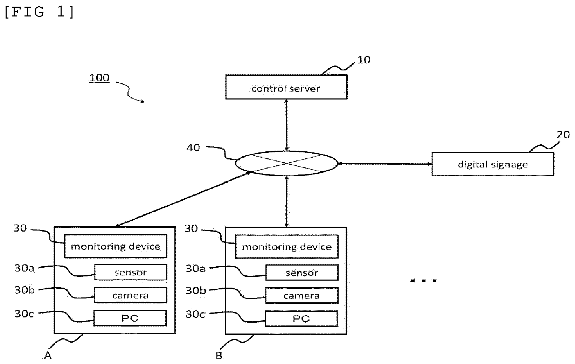

FIG. 1 is a diagram showing a configuration example of a digital signage system according to this embodiment. The digital signage system 100 in FIG. 1 includes a digital signage control server 10, a digital signage 20, and a monitoring device 30, and is connected via a network 40.

A digital signage control server (hereinafter referred to as a control server) 10 is a device that distributes various contents such as advertisement of a store and vacancy information to the digital signage 20. Various distributed contents are displayed on the display of the digital signage 20.

The digital signage 20 is an image display device such as a liquid crystal display installed outdoors (for example, a huge display), a store front, a building entrance, a wall, and the like. The digital signage 20 is connected to the control server 10 on the cloud via the network 40, and displays distribution information such as guide information, advertisement and vacancy information, such as a signboard or a poster.

The monitoring device 30 is a device that monitors vacancy information (vacancy status) of a store or the like. (For example, store A, store B ...). The monitoring device 30 is connected to each vacancy detection device such as a sensor 30 a for detecting human presence, a camera 30 b for image analysis of the presence of a person, and a PC 30 c used by a person in charge at the store to manually enter setting information and vacancy information, and transmits the vacancy information of the store to be monitored to the control server 10 on the cloud via the network 40.

It is noted that the monitoring device 30 may be a device of an integrated housing including the sensor 30 a, the camera 30 b, and / or the PC 30 c. Further, the PC 30 c is various information processing devices including a smartphone, a tablet terminal, a mobile phone, a PC (Personal Computer), and the like.

The network 40 is a communication network including wired and wireless. The network 40 includes, for example, the Internet, a public line network, WiFi (registered trademark), and the like.

### <Hardware configuration>

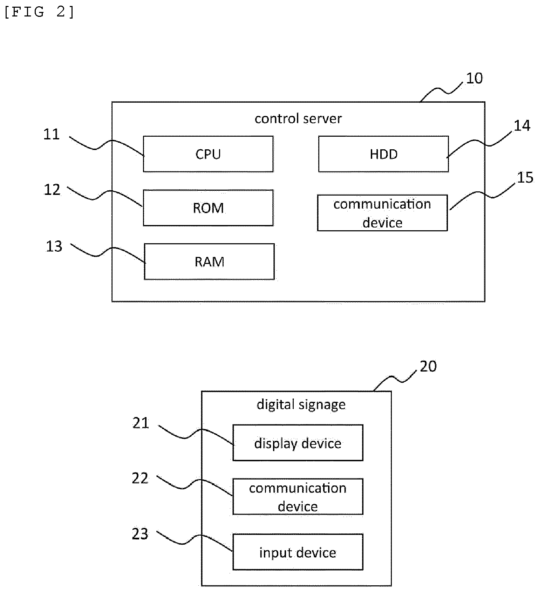

FIG. 2 is a diagram showing a hardware configuration example of the control server according to the present embodiment. 2, the control server 10 includes a CPU (Central Processing Unit) 11, a ROM (Read Only Memory) 12, a RAM (Random Access Memory) 13, a HDD (Hard Disk Drive) 14, and a communication device 15.

The CPU 11 executes various computation programs and computation processing. The ROM 12 stores necessary programs and the like at the time of activation. The RAM 13 is a work area for temporarily storing processing of the CPU 11 and storing data. The HDD 14 stores various data and programs. The communication device 15 communicates with other devices via the network 40.

The digital signage 20 includes a display device 21, a communication device 22, and an input device 23.

The display device 21 is a color display realized by a liquid crystal display, a plasma display, an LED display, or the like. The communication device 22 is a device for performing information communication with an external device. The input device 23 is realized by unique operation keys, buttons, or the like. The input device 23 can be realized by a touch panel that can detect the tap coordinates (touch coordinates) on the display screen in place of the operation keys and buttons. In this case, the input operation is realized by a touch panel on the screen and a software key or the like controlled by the program.

### <Software configuration>

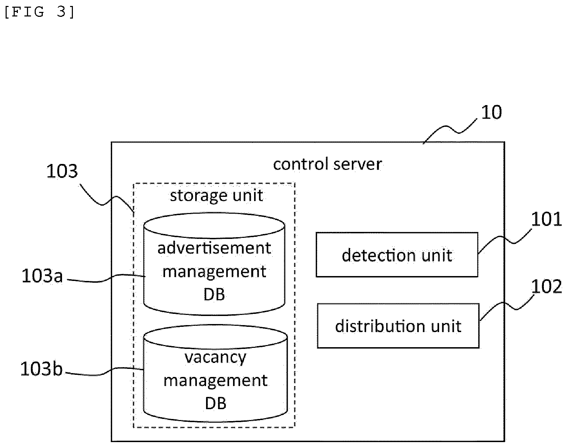

FIG. 3 is a diagram showing a software configuration example of the control server according to the present embodiment. The control server 10 includes a detection unit 101, a distribution unit 102, and a storage unit 103 as main functional units.

The detection unit 101 has a function of detecting the vacant number of store facilities provided to the user.

The distribution unit 102 has a function of distributing information corresponding to the vacant number of the store facilities detected by the detection unit 101 to the digital signage 20. For example, if the vacant number of the store facilities is larger than the predetermined remaining number, the distribution unit 102 distributes information on the number of vacant store facilities, and if the vacant number of the store facilities is smaller than the predetermined remaining number, it distributes advertisement content information.

The storage unit 103 has a function of storing an advertisement management DB (Data Base) 103 a and a vacancy management DB 103 b. The advertisement management DB 103 a is a database that stores the advertisement contents of the store. The vacancy management DB 103 b is a database for managing vacancy information (vacancy situation) of a store in real time.

The functional unit is realized by a computer program executed on hardware resources such as a CPU, a ROM, and a RAM of a computer constituting the control server 10. These functional units may be replaced with "means", "module", "unit", or "circuit".

### (Advertisement management DB and vacancy management DB)

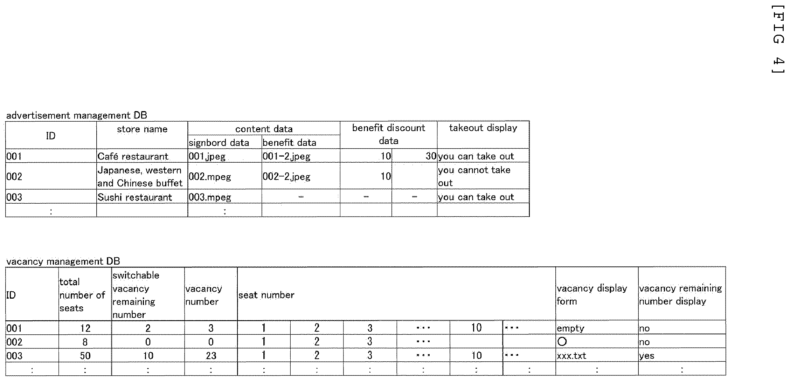

FIG. 4 is a diagram showing data examples of the advertisement management DB 103a and the vacancy management DB 103b according to the present embodiment.

The advertisement management DB 103 a is a database that stores the advertisement contents of the store. The advertisement management DB 103 a has data items such as "ID", "store name", "content data", "benefit discount rate", "take out display", for example.

"ID" indicates a unique identifier assigned for each store.

"Store name" indicates the name of the store.

"Content data" indicates a data file of advertisement content of a store displayed on the digital signage 20. Examples of advertisement contents include signboard data such as store name, logo, brand mark, sales guide, CM (commercial) movie, benefit data such as coupon information and campaign information.

"Benefit discount rate" indicates a discount rate which is the degree of benefit of benefit data displayed on a digital signage. Also, by specifying the range (for example, 10 to 30%) of the discount rate, it is possible to change the discount rate according to the vacancy situation.

"Take out display" indicates the presence or absence of "take out display" when the item of the store can take out. When "take-out display" is set, advertisement contents such as "you can take out", for example, are displayed when it is full.

The vacancy management DB 103 b is a database for managing vacancy information (vacancy situation) of a store in real time. The vacancy management DB 103b stores data items such as "ID", "total number of seats", "switchable vacancy remaining number", "vacancy number", "seat number", "vacancy display form", "vacancy remaining number display".

"ID" indicates a unique identifier assigned for each store.

"Total number of seats" indicates the total number of seats in the store.

"Switchable vacancy remaining number" is a threshold used when switching information displayed on the digital signage 20. When the number of vacancies in the store reaches the "switchable vacancy remaining number", the vacancy information of the store displayed on the digital signage 20 is switched to the advertisement content. The "switchable vacancy remaining number" may be defined by the ratio of the number of vacancies remaining in the total number of seats (switchable vacancy remaining rate (%)).

"Number of vacancies" indicates the number of vacancies in "total number of seats". "Number of vacancies" fluctuates in real time.

"Seat number" indicates the number of the seat installed in the store. For example, in the case of a store with a total seat number of 12, seats are fixedly associated with "seat number" 1 to 12 and registered. In addition, the real vacancy status (status) is managed in real time for each seat. For example, in the case of FIG. 4, seat "seat number" is set to bold display shows the non-vacant state (seated state). Therefore, the above "number of vacancies" is equal to the total number of seats of normal display which is not displayed in bold.

The "vacancy display form" is a setting value indicating in what form the display of vacancy information of the store is displayed on the digital signage 20.

The "vacancy remaining number display" is a setting value indicating whether or not to display the remaining number of vacancies when displaying the vacancy information of the store in the digital signage 20.

### <Installation example>

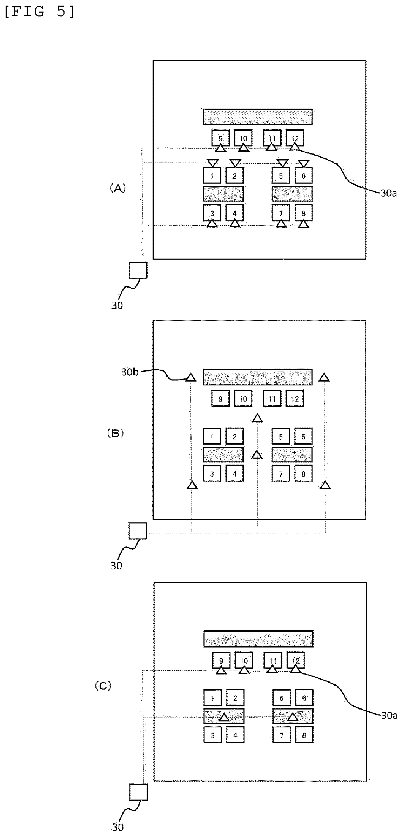

FIG. 5 is a diagram showing an example of setting up a store of the surveillance equipment according to this embodiment. The monitoring device 30 is a device that monitors vacancy information (availability situation) of a store or the like. The monitoring device 30 is installed at an arbitrary place in the store. Further, the monitoring device 30 is connected to the vacancy detection device such as the sensor 30 a, the camera 30 b, and the PC 30 c so as to communicate with each other via a wireless (or wired) network in the store.

FIG. 5 (A) shows an example in which the sensor 30 a is used as a vacancy detection device. In the case of FIG. 5 (A), the store has a total of 12 seats of seat numbers 1 to 12, and a sensor 30 a is installed in each seat.

The sensor 30 a is installed in each seat and detects the seat of the user. When the monitoring device 30 detects that the seat is in a non-vacant state (that is, a seated state) based on the detection signal of the sensor 30a, the monitoring device 30 transmits the ID, the seat number, and the information indicating that the seat is in the non-vacancy state to the control server 10. In addition, the sensor 30a detects the user's leaving. When the monitoring device 30 detects that the seat is in a vacancy state based on the non-detection signal of the sensor 30 a, the monitoring device 30 transmits the ID, the seat number, and information indicating that the seat has become vacant, to the control server 10.

FIG. 5(B) shows an example of using the camera 30 b as a vacancy detection device. In the case of FIG. 5 (B), one or more cameras 30 b are installed on the store ceiling or the like. A total of 12 seats with seat numbers 1 to 12 are provided in the store, and the camera 30 b covers all the seats in the imaging range.

The camera 30 b images all the seats in real time, and the captured image is input to the monitoring device 30 one by one. When the monitoring device 30 detects that the seat is in a non-vacancy state based on the processing result of the image analysis, the monitoring device 30 transmits the ID, the seat number, and information indicating that the seat is in a non-vacancy state (that is, a seated state) To the control server 10. When the monitoring device 30 detects that the seat is in a vacant state based on the processing result of the image analysis, the monitoring device 30 transmits the ID, the seat number, and the information indicating that the seat is in vacancy state, to the control server 10 via network 40.

In the case of FIG. 5(C) showing an example of using the sensor 30 a and the camera 30 b together as a vacancy detection device, the sensor 30 a is installed in each seat of the store and one or more cameras 30 b Is installed in the store ceiling or the like. In addition, the store has a total of 12 seats with seat numbers 1 to 12. For example, due to the convenience of stores and seats, it is advisable to cover the seats (for example, table seats and the like) that is more efficient for installing the camera 30 b with the camera 30 b.

The PC 30 c may be used as a vacancy detection device instead of or in combination with the sensors 30 a and 30 b. In the case of using the PC 30 c, a person in charge at the store operates the PC 30 c and inputs the vacancy status confirmed visually or the like to the monitoring device 30. When the fact that the seat is in a non-vacancy state (that is, the seated state) is inputted, the monitoring device 30 transmits the ID, the seat number, and information indicating that the seat is in the non-vacancy state to the control server 10. Further, when the fact that the seat is in a vacancy state is input, the monitoring device 30 transmits to the control server 10 the ID, the seat number, and information indicating that the seat is in a vacancy state.

Further, when the monitoring device 30 according to the present embodiment is not installed, the sensor 30a, the camera 30b, and the PC 30c notify the control server 10 that the ID, the seat number, and the seat are in a non-vacant state and a vacancy state It is also possible to directly transmit information indicating that it is.

In addition, since the camera 30 b according to the present embodiment detects the vacancy condition of the seat based on the image analysis, one camera 30 b can detect the vacancy condition of a plurality of seats. Therefore, for example, in the case where the store area is narrow, or the camera 30 b is an omnidirectionally driven camera, if all the seats of the store can be covered by the imaging range, only one camera 30 b may be installed.

### <Screen>

### (New registration of store information)

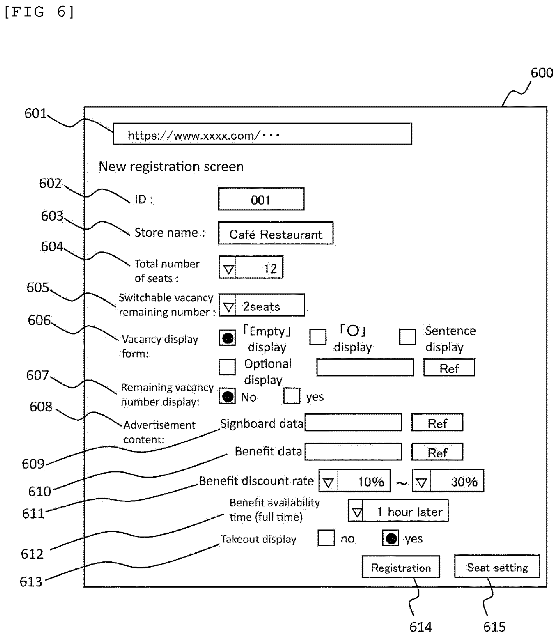

FIG. 6 is a diagram showing an example of a new registration screen of store information according to this embodiment. Initially, the person in charge of the store accesses the new registration screen 600 of the control server 10 using the PC 30 c or the like.

The URL 601 is a column for inputting the location information (ex., domain, IP address, etc.) of the control server 10.

The ID 602 indicates a unique identifier assigned to each store. The ID given in advance from the control server 10 is input or automatically issued to the store at the time of registration.

The store name 603 is a column for entering the name of the store.

The total number of seats 604 is a column for inputting the total number of seats in the store.

The switchable vacancy remaining number 605 is a column for inputting a threshold used when switching information displayed on the digital signage 20. For example, when the person in charge sets "switchable vacancy remaining number" to 0, when the remaining vacancy number of the seat becomes 0 (full), the vacancy information of the store being displayed on the digital signage 20 is switched to the advertisement content. Further, for example, when the person in charge sets "switching vacancy remaining number" to 2, when the remaining vacancy number of the seat becomes 2, the vacancy information of the store being displayed on the digital signage 20 is switched to the advertisement content. In this manner, the person in charge at the store inputs the vacancy remaining number that the user wishes to switch between the vacancy information of the display store and the advertisement content on the digital signage 20 as the "switchable vacancy remaining number". However, as a measure of the value to be set, a value indicating a state that is full or almost full is input.

The vacancy display form 606 is a column for setting in what form the display of the vacancy information of the store is displayed on the digital signage 20. For example, when "check" "sky" is checked, the vacancy display is displayed as "empty". When "○" display is checked, the vacancy display is indicated by symbols such as "○" or "Δ". When "sentence display" is checked, the vacancy display is displayed as sentences such as "It is free", "It is relatively free", "seats are available". Also, if "optional display" is checked, vacancy display is displayed with arbitrary characters, symbols or images designated by the person in charge of the store. The person in charge inputs file data of arbitrary characters, symbols or images.

The remaining vacancy number display 607 is a column for setting whether or not to display the remaining number of vacancies when displaying the vacancy information of the store in the digital signage 20. When "Yes" is checked, the vacancy such as "sky" and "o" are displayed on the digital signage 20 together with the number of vacancies remaining at present.

The advertisement content 608 is a column for inputting advertisement content displayed on the digital signage 20 by the staff in charge of the store.

First, the person in charge inputs data files such as store name, logo, brand mark, sales guide, CM, etc. in the column of "signboard data" 609.

In addition, the person in charge inputs a data file such as coupon information, campaign information and the like in the column of "benefit data" 610. The data file includes still image data, moving image data, and text data. Further, it is also possible to input a plurality of data files as a data file as an advertisement content.

In addition, the person in charge inputs the discount rate of the benefit of the benefit data in the column of "benefit discount rate" 611. In addition, the discount rate can be entered within a certain range (for example, 10 to 30%), and the discount rate can be changed according to the availability situation.

In addition, when a benefit data is displayed on the digital signage 20 at the time of full occupancy, the person in charge sets a time during which the user can use the benefit in the column of "benefit availability time (full time)" 612. For example, with reference to the current time, it is set how many hours later the benefit can be used.

In addition, the person in charge sets whether or not to display that the merchandise at the store is ready to take out by checking "Yes" in the column of "take out display" 613.

The registration 614 is a registration button for registering input information.

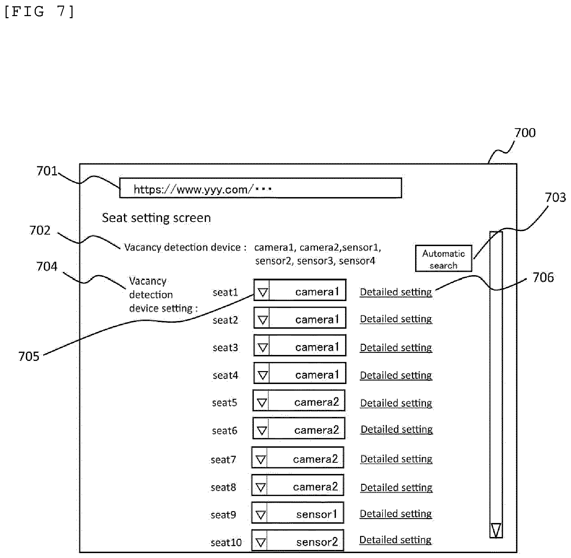

The seat setting 615 is a button for setting the seat (see FIG. 7 to be described later).

As described above, the input information entered in the new registration screen 600 is stored in the advertisement management DB 103 a and the vacancy management DB 103 b (see FIG. 4).

### (Seating setting)

FIG. 7 is a diagram showing an example of a seat setting screen according to the present embodiment. After installing the monitoring device 30, the sensor 30 a, and the camera 30 b, the person in charge of the store accesses the seat setting screen 700 of the monitoring device 30 (or the control server 10) by using the PC 30 c. For convenience of explanation, the seat setting screen 700 in FIG. 7 will be described with reference to the example in FIG. 5 (C).

The URL 701 is a column for inputting the location information of the monitoring device 30.

The vacancy detection device 702 registers the sensor 30 a, the camera 30 b, and the PC 30 c installed in the store. The vacancy detection device 702 is reflected in a selection column 705 to be described later.

The automatic search 703 is a button for automatically detecting the sensors 30a and 30b installed in the store. When the automatic detection 703 is pressed, the monitoring device 30 searches the sensors 30 a and 30 b existing in the in-store network using the predetermined network protocol.

Vacancy detection device setting 704 is a setting column associating with each seat of the store, and the vacancy detection device. For example, as the vacancy detection device for detecting vacancy of the seats 1 to 4, the camera 1 is selected from the selection column 705. The camera 2 is selected from the selection column 705 as a vacancy detection device for detecting vacancy of the seats 5 to 8. In addition, sensors 1, 2, 3, 4 are selected from the selection column 705 as vacancy detection devices for detecting vacancy of the seats 9, 10, 11, 12.

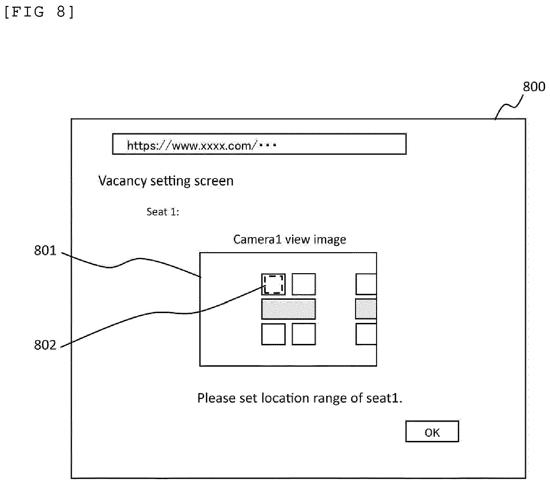

The detailed setting 706 is a button for performing detailed setting of the seat detection device (see FIG. 8 to be described later).

### (Detailed setting of seat)

FIG. 8 is a diagram showing an example of a seat detail setting screen according to the present embodiment. When the detailed setting 706 (see FIG. 7) of the seat 1 is pressed on the seat setting screen 700, the screen transits to the seat detail setting screen 800 of FIG. 8.

In the camera view screen 801, a captured image (image) of the camera 1 associated with the seat 1 is displayed. The administrator designates the range 802 where the seat 1 is located in the captured image (image) of the camera 1 with a mouse or the like and presses OK 803.

The camera 30 b can detect the vacancy status of a plurality of seats existing in one captured image. Here, when detecting the vacancy status of a plurality of seats with one camera 30 b, it is necessary to uniquely associate the seat and the "seat number" of the seat in advance. Thus, for example, when the monitoring device 30 detects the seating of the user in the range 802 within the captured image of the camera 1, the monitoring device 30 detects that the seat 1 is in the non-vacant state (seated state).

### <Example of display screen of digital signage>

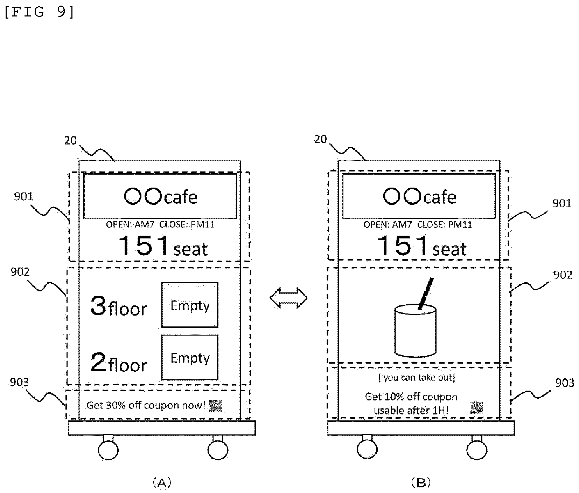

FIG. 9 is a diagram showing an example of the display screen (part 1) of the digital signage according to this embodiment. The digital signage 20 in FIG. 9 is placed at a position where the digital signage 20 is easily visible from the outside, such as near the entrance of the store.

### (If available)

FIG. 9 (A) shows the display screen of the digital signage 20 when the seat of the store is vacant (when the number of vacancies in the store is larger than the number of remaining vacancy).

On the display screen of the digital signage 20, in the display area 901, as a "signboard data" of the store delivered from the control server 10, a logo of the store, a sales guide, and the like are displayed. By appealing the signboards / advertisements of stores, we will stop interests of users.

In the display area 902, vacancy information of the store delivered from the control server 10 is displayed in a vacancy display form of "empty". By appealing vacancies in real time, urge users to keep an eye on their arrival immediately.

In the display area 903, currently available coupon information is displayed as "benefit data" of the store delivered from the control server 10. For example, as indicated as "get 30% off now, get coupon!", As soon as the discount rate is indicated to the effect that the benefit is available, we urge the user to enter the store right now.

The discount rate varies in a certain range (for example, 10 to 30%) according to the availability situation. By displaying coupon information having a large discount rate as the seat of the store is vacant (as the number of vacancies in the store is larger), when the seat of the store is large, the user urges the user to enter the store strongly by doing so, it is possible to fill vacancies.

Among users, when selecting a restaurant, there are cases where a restaurant is selected based on the desire of "whether to immediately enter the store", "whether the seat is free" or "not want to wait".

The user is attracted by the advertisement contents of the digital signage 20, and at a glance, it is understood that the store has vacancy. Therefore, since the user can arrive at the seat immediately after entering the store without waiting time, it is possible to enter the store with confidence. Although I tried to enter the store, I never have the experience that the seat was not vacant (it was not full in full).

In this way, when the seat is vacant, the store side wants to fill the seat actively as the number of the vacancies increases, but in the digital signage 20, together with the advertisement contents, the vacancy information is displayed in real time to wait You can effectively appeal that you can enter without time.

Also, by displaying available coupon information that can be used immediately, attracting customers with immediate effect can be attempted. Furthermore, when there are a lot of seats in the store, by increasing the discount rate of the coupon information, it is possible for the user to strongly enter the store and fill the vacancies.

### (When it is crowded)

FIG. 9 (B) shows the display screen of the digital signage 20 when the store's seat is crowded (when the number of vacancies in the store is smaller than the number of vacancies remaining in the store).

In the display area 901 and display area 902, "signboard de distribution tempo from the control server 10 as over data", are displayed such as a store logo and sales assistance. When the store's seat is crowded, the vacancy information of the store is not displayed in order to prevent the loss of opportunities for visitors to visit and the drop in attracting ability.

In the display area 903, coupon information that can be used in the future is displayed as "benefit data" of the store delivered from the control server 10. For example, as indicated as "10% off coupon usable after 1 H!", The fact that the benefit is available from the time that congestion will be eliminated, and the discount rate is indicated, whereby the user urge you to enter the store later. Also, as displayed as "You can take out", prompt take-out if the store's seat is crowded.

When the store's seat is crowded, displaying the vacancy information indicating the full seats on the digital signage 20 may cause a decrease in the attracting ability of the digital signage 20 because the visitor's visit is far away. For this reason, the digital signage 20 according to the present embodiment does not display vacancy information indicating full occupancy when the store's seat is crowded, so that the opportunity of the visitor's visit is not lost. Because some users think that it is okay to wait even a little because they come all the way even if they are fully booked at the store. Some users may wish to take out goods.

On the other hand, by displaying available coupon information that can be used later, it is possible to suppress the user's entry immediately and encourage customers to attract customers from the time when congestion will be resolved. Furthermore, encourage take-out of products that are sales even if there is no vacancy in the store.

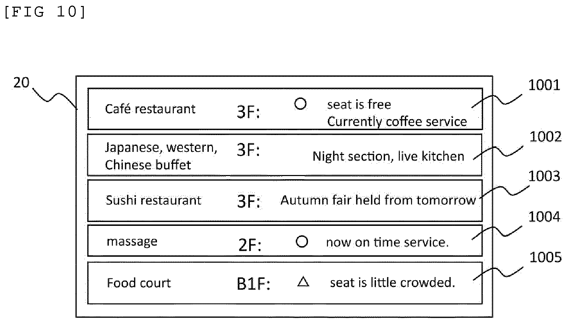

FIG. 10 is a diagram showing an example of the display screen (part 2) of the digital signage according to this embodiment. The digital signage 20 in FIG. 10 is of a type that displays advertisement contents of a plurality of stores, and is arranged, for example, in the vicinity of the entrance open space of 1 F of a tenant building or a complex commercial facility (shopping mall).

Since the seats are vacant in the stores related to the display areas 1001 and 1004, together with the vacancy information, for example, "currently coffee service", "now on time service in progress", etc., currently available campaign Information is displayed.

Also, in the store related to the display area 1002, since the seat is crowded, the vacancy information is not displayed, and for example, campaign information that can be used in the future" such as "night section, live kitchen" has been done.

Also, in the store related to the display area 1003, since the seat is crowded, the vacancy information is not displayed, and for example, campaign information that can be used in the future is displayed such as" Autumn fair held from tomorrow! "Etc. Has been done. Also, urge take-out as indicated as "take-out OK".

It is noted that in the stores related to the display areas 1001, 1004, 1005, since the vacancy display form 606 is checked on "○" display", the vacancy display is displayed with symbols such as "○" and "Δ" (See FIG. 6).

As described above, according to the digital signage system 100 of the present embodiment, information for displaying the digital signage is optimized in accordance with the vacancy status of the store, and using the digital signage 20, convenience of the user searching for the store It is possible to improve the customer attractiveness of stores that want to attract customers effectively.

### <Information processing>

Information processing of the control server according to this embodiment will be described.

### (Update Processing)

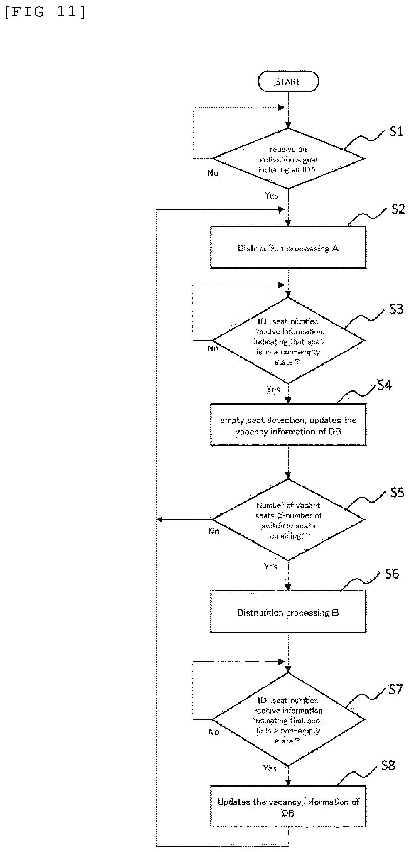

FIG. 11 is a flowchart showing the updating process of the control server according to the present embodiment.

S1: The control server 10 determines whether or not an activation signal including an ID is received from the monitoring device 30. Upon start-up, the monitoring device 30 transmits an activation signal including the store ID to the control server 10.

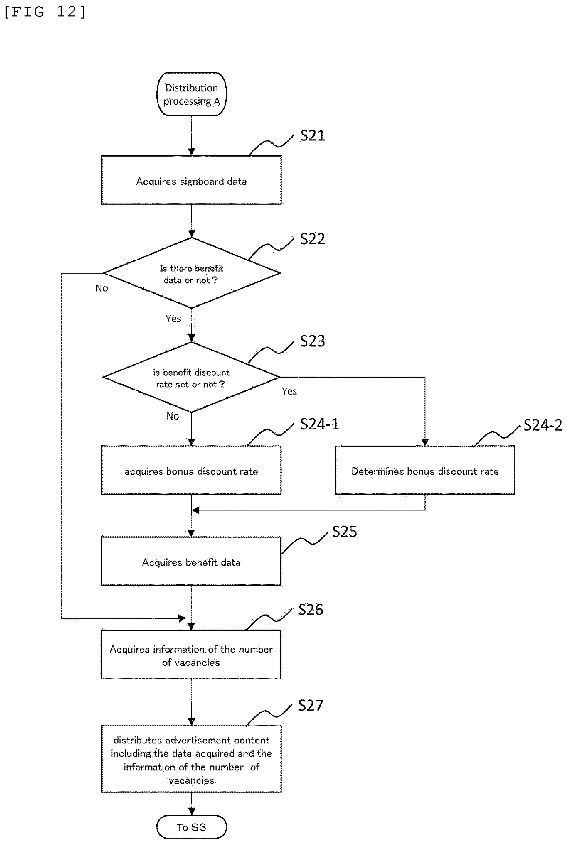

S2: The control server 10 executes the distribution processing A. Distribution processing A is processing for distributing advertisement content and vacancy information. The distribution processing A will be described later (see FIG. 12).

S3: The control server 10 determines from the monitoring device 30 whether ID, seat number and information indicating that the seat is in a non-vacancy state has been received.

S4: The control server 10 updates the vacancy information based on the information of S3. That is, in the store specified by the ID, the vacancy status (status) of the seat specified by the seat number is changed from the vacancy state to the non-vacancy state (for example, "seat number" in FIG. 4 is displayed in bold). As described above, when the monitoring device 30 detects that the seat is in the non-vacancy state based on the detection signal of the vacancy detection device, the monitoring device 30 transmits the ID, the seat number and the information indicating that the seat is in the non-vacancy state, and transmits it to the control server 10.

S5: The control server 10 determines whether "the number of vacancies ≦ switchable seats remaining number" is established. While "Number of vacancies ≦ switchable seats remaining number" is not satisfied, the seat of the store is vacant. On the other hand, when "the number of vacancies ≦ switchable seats remaining number" is satisfied, it is confirmed that the seats of the store are almost or not vacant means.

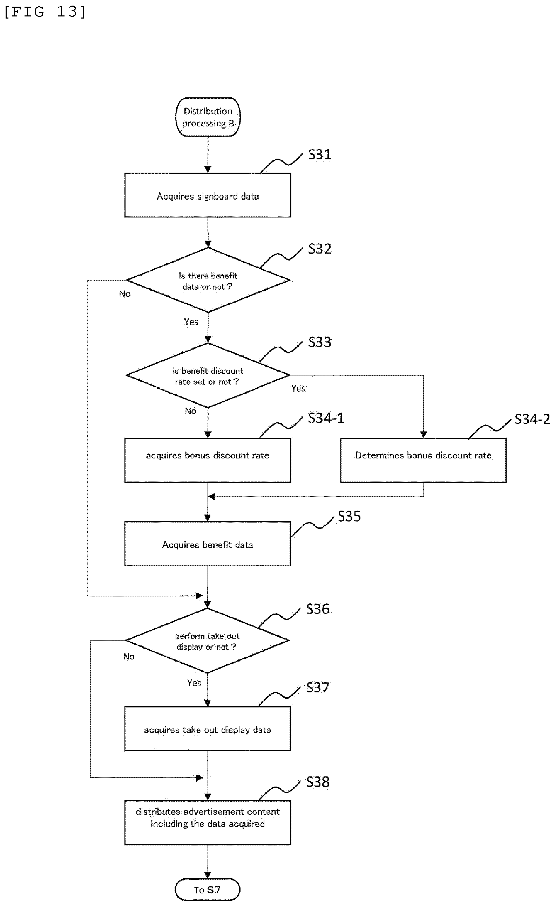

S6: The control server 10 executes distribution processing B. Distribution processing B is processing of distributing advertisement contents without distributing vacancy information. The distribution processing B will be described later (see FIG. 13).

S7: The control server 10 determines from the monitoring device 30 whether ID, seat number and information indicating that the seat has become vacancy state has been received.

S8: The control server 10 updates the vacancy information based on the information of S 7. That is, in the store specified by the ID, the vacancy status (status) of the seat specified by the seat number is changed from the non-vacancy state to the vacancy state (for example, "seat number" in FIG. When the monitoring device 30 detects that the seat is in vacancy state based on the non-detection signal of the vacancy detection device, the monitoring device 30 transmits the ID, the seat number, and information indicating that the seat has become vacant, to the control server 10.

Then, the processing proceeds to S2 again, and the distribution processing A is executed.

### (Distribution Processing A)

FIG. 12 is a flowchart showing the distribution processing A of the control server according to this embodiment. This distribution processing is executed by the distribution unit 102.

S21: The control server 10 acquires "signboard data" from the advertisement management DB 103a. The signboard data is one of the advertisement contents to be delivered to the digital signage 20.

S22: Next, the control server 10 refers to the advertisement management DB 103a and judges whether there is "benefit data" or not.

S23: The control server 10 refers to the advertisement management DB 103a and judges whether or not the range of "benefit discount rate" is set. If the range of the "benefit discount rate" is not set, the processing proceeds to S24-1. When the range of the "benefit discount rate" is set, the processing proceeds to S24-2.

S24-1: The control server 10 acquires one "bonus discount rate" from the advertisement management DB 103a.

S24-2: The control server 10 determines one "benefit discount rate" from the advertisement management DB 103a based on the range of the "benefit discount rate". "benefit discount rate" is determined from the range of "award discount rate" according to the vacancy situation. Determination method, the larger the "vacancy number" of the store, "benefits split in the range of discount rate", to determine the large benefits discount rate. Also, as the number of vacancies in the store is smaller, a smaller benefit discount rate is determined within the range of "benefit discount rate".

For example, in the case of "ID" 001 in FIG. 4, the range of "benefit discount rate" is 10 to 30%. Since the "total number of seats" is 12, if the "number of vacancies" is 12, the determined "discount rate" is 30%. On the other hand, if the "number of vacancies" is 10, the determined "discount rate" is 10%. In the case where the "number of vacancies" is between 12 and 10, the determined "discount rate" may be an intermediate value of 10 to 30%, for example, 15%.

S25: The control server 10 acquires "benefit data" from the advertisement management DB 103a. The "benefit data" is, for example, a currently available bonus like "get 30% off now, get coupon!"! In order to urge the user to enter the store right now, the discount rate is indicated to the effect that the benefit is now available.

S26: Next, the control server 10 acquires "number of vacancies" from the vacancy management DB 103b.

S27: The control server 10 distributes the advertisement content including the data acquired in S21 and S25 and the information on the "number of vacancies" acquired in S26 to the digital signage 20 (see, for example, FIG. 9 (A)).

When delivering information on the "vacancy number", the control server 10 refers to the vacancy management DB 103 b and follows the setting of "vacancy display mode" and "vacancy remaining number display". For example, when "vacancy display mode" is set to "sky" and "vacancy remaining number display" is set to "Yes", the information on "vacancy number" is displayed as "empty" display and current ".

### (Distribution Processing B)

FIG. 13 is a flowchart showing distribution processing B of the control server according to the present embodiment. This distribution processing is executed by the distribution unit 102.

S 31: The control server 10 acquires "signboard data" from the advertisement management DB 103 a.

S 32: Next, the control server 10 refers to the advertisement management DB 103 a and judges whether there is "benefit data" or not.

S 33: The control server 10 refers to the advertisement management DB 103 a and judges whether or not the range of the "benefit discount rate" is set. If the range of the "benefit discount rate" is not set, the processing proceeds to S 34 - 1. When the range of the "benefit discount rate" is set, the processing proceeds to S 34 - 2.

S 34 - 1: The control server 10 acquires one "bonus discount rate" from the advertisement management DB 103 a.

S 34 - 2: The control server 10 determines one "benefit discount rate" from the advertisement management DB 103 a based on the range of the "benefit discount rate". In the determining method, unlike the case where the seat is vacant, it is unnecessary to set the large benefit discount rate as the seat is crowded, so that, for example, the smallest benefit discount rate is determined within the range of "benefit discount rate".

For example, in the case of "ID" 001 in FIG. 4, the range of "benefit discount rate" is 10 to 30%. Therefore, the determined "discount rate" is 10%.

S35: The control server 10 acquires "benefit data" from the advertisement management DB 103a. The "benefit data" is, for example, a benefit that can be used in the future rather than the present, such as "Get 10% off coupon usable after 1 H!". It is possible to suppress the user's entry right now and encourage customers to attract customers from the time that congestion will be resolved.

S 36: Next, the control server 10 refers to the advertisement management DB 103 a and judges whether or not to perform "take out display".

S37: The control server 10 acquires take-out display data. As the takeout display data, existing format data can be used.

S 38: The control server 10 distributes the advertisement content including the data acquired in S 31, S 35, and S 37 to the digital signage 20 (see, for example, FIG. 9B).

### <Summary>

As described above, the digital signage control device 10 according to the present embodiment distributes vacancy information of a store when the number of vacancies is larger than a predetermined vacancy number, and when the number of available vacancies is smaller than a predetermined number of vacancies, distributes stores of the advertisement content to the digital signage 20.

That is, when the seat is vacant, the digital signage 20 displays the advertisement contents and the vacancy information of the store, so that the user can see at a glance that there are vacancies in the store and can enter the store with confidence. The store side can effectively appeal that it can enter without waiting time.

In addition, the digital signage 20 switches to the advertisement content of the store without displaying the vacancy information which was displayed when the seat is empty when the seat is crowded, so that the user loses opportunity to visit the digital signage 20 I will not let it.

As a result, according to the digital signage system 100 of the present embodiment, information for displaying the digital signage is optimized in accordance with vacancy status of the facility provided to the user such as a store, and the digital signage 20 is used to store information and it is possible to improve the convenience of the user who is looking for and to improve the attractiveness of the store that wishes to attract customers effectively.

Although the present invention has been described with reference to the preferred embodiments of the present invention, the present invention is not limited to these concrete examples without departing from the broad spirit and scope of the present invention as defined in the claims It is obvious that various modifications and changes can be made to the examples. That is, the present invention should not be construed as being limited by details of specific examples and attached drawings.

For example, facilities to be provided to users such as stores and the like are not limited to the seats of the stores according to the present embodiment, as long as they are facilities that have a limited number of users that can be used. For example, it may be a private room of a restaurant, a karaoke box, a sheet of manga cafe, a loan or the like.

In addition, the digital signage system 100, the digital signage control server 10, and the digital signage 20 according to the present embodiment can be applied to, for example, dynamic signage, interactive signage, narrowcasting, video distribution, audio distribution, digital POP, digital signature , A digital bulletin board, a digital display signage, a digital content distribution system, an electronic POP , an electronic poster, an electronic board, an electronic information board, an electronic display, an electronic signboard system, an electronic bulletin board, an electronic billboard, or the like.

### Description of Reference Symbols

0139
- 10: digital signage control server
- 20: digital Signage
- 30: monitoring equipment
- 40: network
- 100: digital signage system
- 101: detection unit
- 102: distribution unit
- 103: Storage unit

## Claims

1. A digital signage control apparatus for distributing information to be displayed on a digital signage via a network, the digital signage control apparatus comprising:
a storage part configured to store advertisement contents of a store;
a detection part configured to detect a vacant number of store facilities to be provided to a user; and
a distribution part configured to distribute information corresponding to the vacant number of the store facilities to the digital signage,
wherein the distribution part distributes the information on the number of vacant store facilities when the vacant number of the store facilities is larger than a predetermined remaining number, and advertisement content information of the store, in place of the information on the number of vacant store facilities, when the vacant number of the store facilities is smaller than the predetermined remaining number.

2. The digital signage control apparatus according to claim 1,
wherein the advertisement content information of the store, which is to be distributed when the vacant number of the store facilities is smaller than the predetermined remaining number, is not benefit information that is currently available but benefit information that can be used from the time when congestion is canceled.

3. The digital signage control apparatus according to claim 1,
wherein the advertisement content information of the store, which is to be distributed when the vacant number of the store facilities is smaller than the predetermined remaining number, is information on take-out of merchandise of the store.

4. The digital signage control apparatus according to any one of claims 1-3,
wherein the distribution part further distributes advertisement content information of the store when the vacant number of the store facilities is larger than the predetermined remaining number, and
the advertisement content information of the store, which is to be distributed when the vacant number of the store facilities is larger than the predetermined remaining number, is benefit information that is currently available.

5. The digital signage control apparatus according to claim 4,
wherein, as the vacant number of the store facility becomes larger than a predetermined remaining number, a benefit degree of the benefit information becomes greater.

6. The digital signage control apparatus according to any one of claims 1-5,
wherein the vacant number of the store facilities is the number of vacant seats, information on the number of vacant seats is distributed when the number of vacant seats in the seat is larger than a predetermined vacant seat remaining number, and
the advertisement content information of the store is distributed when the number of vacant seats is smaller than the predetermined vacant seat remaining number.

7. A digital signage control program that causes a digital signage control apparatus, which digital signage control apparatus is configured to distribute information to be displayed on a digital signage via a network, to functions as:
a storage part configured to store advertisement contents of a store;
a detection part configured to detect a vacant number of store facilities to be provided to a user; and
a distribution part configured to distribute information corresponding to the vacant number of the store facilities to the digital signage,
wherein the distribution part distributes the information on the number of vacant store facilities when the vacant number of the store facilities is larger than a predetermined remaining number, and advertisement content information of the store, in place of the information on the number of vacant store facilities, when the vacant number of the store facilities is smaller than the predetermined remaining number.

8. A digital signage system including a digital signage for displaying information and a digital signage control apparatus for distributing information to be displayed on a digital signage via a network,
the digital signage control apparatus includes:
a storage part configured to store advertisement contents of a store;
a detection part configured to detect a vacant number of store facilities to be provided to a user; and
a distribution part configured to distribute information corresponding to the vacant number of the store facilities to the digital signage,
wherein the distribution part distributes the information on the number of vacant store facilities when the vacant number of the store facilities is larger than a predetermined remaining number, and advertisement content information of the store, in place of the information on the number of vacant store facilities, when the vacant number of the store facilities is smaller than the predetermined remaining number.
